Europäisches Patentamt

European Patent Office

Office européen des brevets

(19)

(11) EP 0 858 242 A2

(12) EUROPEAN PATENT APPLICATION

(43) Date of publication:
12.08.1998 Bulletin 1998/33

(51) Int Cl.6: H04Q 11/04, H04L 12/56

(21) Application number: 98300971.3

(22) Date of filing: 10.02.1998

(84) Designated Contracting States:
AT BE CH DE DK ES FI FR GB GR IE IT LI LU MC NL PT SE
Designated Extension States:
AL LT LV MK RO SI

(30) Priority: 10.02.1997 CA 2197138
04.04.1997 CA 2201813

(71) Applicant: Newbridge Networks Corporation
Kanata, Ontario K2K 2E6 (CA)

(72) Inventors:
• Davis, Tom
  Ottawa, Ontario K1B 4E9 (CA)
• Pezeshki-Esfahani, Hossain
  Ottawa, Ontario, K2B 8L3 (CA)

(74) Representative: Gemmell, Peter Alan, Dr.
Dummett Copp,
25 The Square,
Martlesham Heath
Ipswich, Suffolk IP5 3SL (GB)

(54) **Flow control in asynchronous networks**

(57) In a method of controlling the flow of cells in an asynchronous network, cell flow in upstream and downstream portions of a virtual connection is controlled by respective upstream and downstream control loops employing resource management (RM) cells. The degree of backward coupling between the two control loops is adjusted to optimize network stability and response time by filtering the downstream Backward Explicit Rate or monitoring the degree of congestion at the boundary between the control loops.

Fig. 1

## Description

This invention relates to a method and apparatus for controlling the flow of cells in asynchronous data networks, such as ATM (Asynchronous Transfer Mode) networks.

As is well known, in an ATM network, data packets are segmented into 53-byte cells and transmitted over virtual connections established between end users via a series of ATM switches, which are high speed devices capable of transferring cells arriving at an input port to an appropriate output port in accordance with header information contained in the cells (VPI, VCI) in order to sustain the virtual connection. The cells are reassembled into data packets at the destination.

The ATM Forum Traffic Management working group has defined five service categories: Constant Bit Rate (CBR); real-time Variable Bit Rate (VBR), non real-time Variable Bit Rate (VBR); Available Bit Rate (ABR); and Unspecified Bit Rate (UBR). These categories are distinguished by the parameter sets that describe source behavior and quality of service guarantees. The final two service categories, ABR and UBR, are intended to carry data traffic which has no specific cell loss or delay guarantees. The UBR service category is the simplest of the two, and provides only a guaranteed minimum cell rate. The Allowed Bit Rate (ABR) service category provides source to destination flow control that attempts but is not guaranteed to achieve zero cell loss.

ABR flow control is achieved by the source sending special Resource Management (RM) cells through the network. Each switch in the network indicates its congestion status by optionally writing into the RM cell, and forwarding the cell into the next switch in the data path. Finally, the destination turns the RM cell back towards the source, the switches in the backward data path mark congestion information into the RM cell, which is ultimately received by the source. The source then adjusts its sending rate in response to the information contained in the RM cell.

The RM cell contains three fields which may be written to in order to describe the congestion status of the switch: a no increase (NI) bit which indicates that the source must not increase its sending rate; a congestion indication (CI) bit which indicates that the source must decrease its sending rate; and an explicit rate (ER) field which contains the smallest of the maximum allowable switch. The behavior of the source in response to the information contained in these three fields is well known.

A consideration that exists with ABR flow control, as in any control system, is the instability that may result from excess delay in the feedback path. This problem surfaces in ATM networks when the network spans large geographical distances (i.e. wide area networks (WANs)). The solution that has been defined in the ATM Forum (see ATM Forum document Number: ATM Forum/96-1759) is to segment an end-to-end ABR connection into two or more control loops. In this scenario, a given switch along the data path acts as an ABR destination (virtual destination (VD)) for the upstream control loop, and simultaneously as the ABR source (virtual source (VS) for the downstream control loop. By judiciously placing the VSVD points in the WAN, the feedback delay within any ABR loop can be limited to a value which results in stability.

Although the concept of VSVD solves the problem of stability within each control loop, the end-to-end data flow must still be controlled. If adjacent control loops are not coupled, then upstream cell rates will generally not equal downstream rates. This can result in cell loss at the VSVD boundary.

With schemes that are limited to binary feedback (i.e. CI and NI indications), the coupling between adjacent control loops is straightforward. The switch marks the CI and NI bits exactly as if it were not a VSVD point (i.e. when certain queue size threshold conditions are met one or both of the CI and NI bits are set). There is an implicit coupling between the adjacent loops via congestion status.

With schemes which support explicit rate marking, the coupling is far less straightforward. Communicating the explicit rate required by the downstream loop directly to the upstream one defeats the purpose of fragmenting the end-to-end control loop.

The requirement of stabilizing the control loops both collectively and individually may result in buffer overflow at the VSVD boundaries.

An object of the present invention is to alleviate the aforementioned problems of the prior art.

According to the present invention there is provided a method of controlling the flow of cells in an asynchronous network, wherein cell flow in upstream and downstream portions of a virtual connection is controlled by respective upstream and downstream control loops employing resource management (RM) cells, and the degree of coupling between the two control loops is dynamically adjusted to optimize network stability and response time

An important feature of the invention is to provide the upstream loop with a single numeric value that captures the status not only of the downstream control loop but also the degree of congestion at the VSVD boundary between the upstream and downstream control loops.

The invention provides a method of coupling upstream and downstream ABR ER (Explicit Rate) control loops such that end-to-end stability is achieved, and cell loss at the VSVD boundary is avoided. The invention does not communicate all information between the loops, but only sufficient information to prevent local congestion and ensure global max-min fairness.

The invention also provides a switching node for an asynchronous network, comprising means for providing a virtual destination and virtual source for a pair of upstream and downstream portions of a virtual connection controlled by respective upstream and downstream control loops employing resource management (RM) cells, and means for dynamically adjusting the degree of coupling between said two control loops to optimize network stability and response time.

The invention will now be described in more detail, by way of example, only with reference to the accompanying drawings, in which:-

Figure 1 is a block diagram of an interface between an upstream and downstream control loop;
Figure 2 is a block diagram of basic Explicit Rate queuing block; and
Figure 3 is a block diagram of a basic ER queuing block.

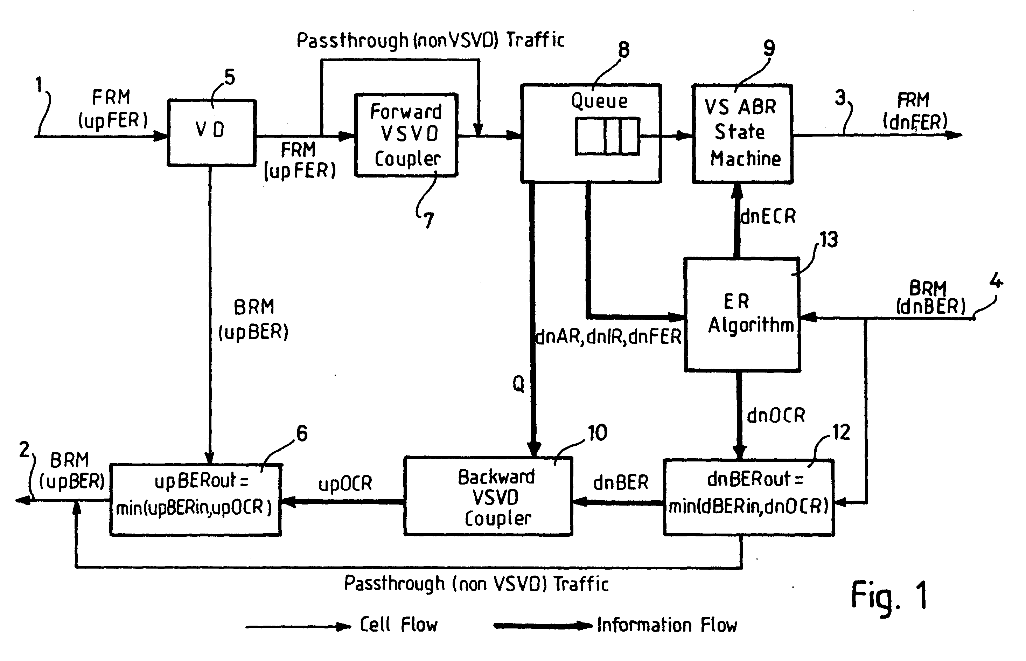

An ABR virtual connection established over an ATM network comprising a plurality of ATM switches between end users is divided into two or more separately controlled ABR segments in accordance with VSVD procedure. In Figure 1, lines 1, 2 represent an upstream ABR virtual connection connected to the source and lines 3, 4 represent a downstream ABR virtual connection connected to the destination. The arrangement shown in Figure 1 is implemented in one of the switch nodes along the virtual connection.

In the forward direction, RM cells from the Virtual destination are passed through the forward VSVD coupler 7 to output queue 8 for passing through the VS ABR state machine 9 and out on the downstream link 3. Incoming cells on the downstream link 4 are passed through unit 12, which sets the Backward explicit rate for the BER upstream cells in accordance with ER calculations performed in ER unit 13, backward VSVD coupler 10, and upstream ER rate setter 6, which sets the upstream BER to the minimum of the optimum upstream cell rate determined by VSVD coupler 10 and the BER on the incoming link 1.

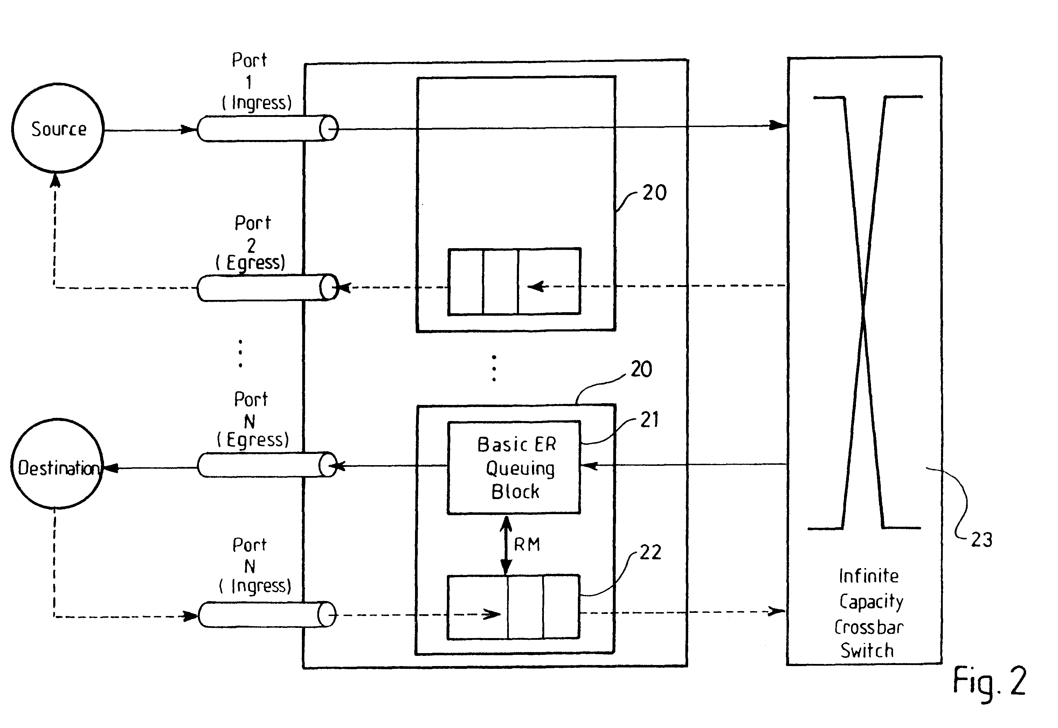

Figure 2 shows a switching element suitable for implementing the invention. Each block is comprised of a basic ER queuing block 21, and a simple FIFO queue 22 for servicing backward RM cells. The traffic is switched over an infinite capacity crossbar switch 23. The model respresents the flow of data cells unidirectionally and the RM cells bidirectionally.

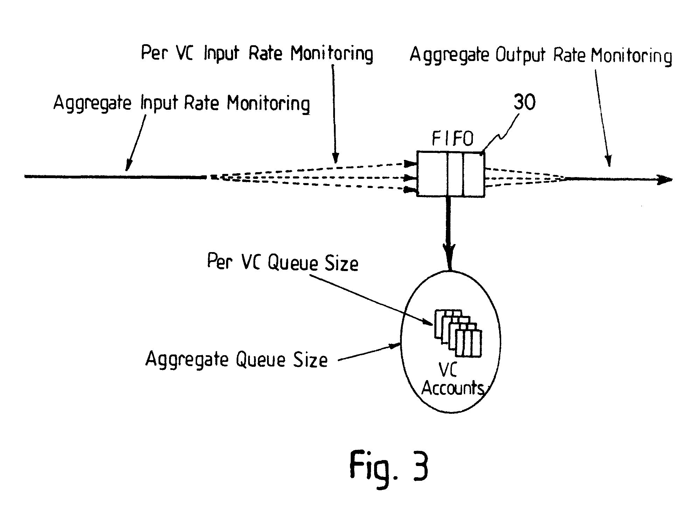

The basic ER queuing block is illustrated in Figure 3. Data and RM cells are queued in a simple FIFO 30. The model is capable of maintaining the following measurements and accounts: aggregate input rate monitoring; VC input rate monitoring; VC queue size; aggregate queue size; group output rate monitoring; VC output rate monitoring; and the number of active VCs. These quantities provide the inputs to the ER calculations.

In an explicit rate ABR control loop, the source (not shown) generates a forward RM (FRM) cell at periodic intervals interspersed with data traffic. The source marks an ER (explicit rate) field in the FRM cell with the peak cell rate (PCR) for the connection. This is the maximum rate at which the source is allowed to send. Each switch along the forward path optionally marks the ER field in the FRM and forwards the RM cell. At the destination VD 5, the FRM cell is turned into a backward RM (BRM) cell, and sent to the first switch in the backward data path via output device 6. Each switch in the backward path marks the ER field in the BRM cell with the minimum of the local explicit cell rate it can support, and the present value of the ER field in the BRM cell.

Examples of suitable rate algorithms for determining the explicit rate (ER) will be described. An explicit rate algorithm calculates an explicit cell rate for each ABR connection at periodic intervals. The interval period is not necessarily equal to one cell time. The ER algorithm, if it is to support max-min faimess, must know the end-to-end congestion status of the aggregate VC stream that it services. Thus, the ER algorithm needs information which provides both the upstream and downstream bottleneck cell rates. Upstream bottleneck cell rates can be determined by reading the explicit rate field in the FRM cell. Downstream bottleneck cell rates can be determined by reading the explicit cell rate field in the BRM cell.

The current demand for bandwidth by a connection can be determined by monitoring the per VC input cell rate. The input cell rate represents the most recent end-to-end bottleneck cell rate for the VC as understood by the closest upstream virtual source.

Each ER algorithm, which obtains the information necessary for determining end-to-end congestion, is capable of achieving max-min fairness.

Nodes which support VSVD functionality require that individual VCs be shaped at the current explicit cell rate. In order to achieve VC shaping, the end-to-end bottleneck cell rate must be estimated for each VC. This can be determined using either: VC input rate monitoring; or by taking the minimum of the explicit rate fields in the forward and backward RM cells.

Each algorithm is described in response to the following events:

1. Change in the bandwidth available to ABR

2. Active VC state change

3. Control interval

4. Forward RM cell arrival

5. Backward RM cell arrival

In this specification, the following abbreviations are used.

- ECRi: the explicit cell rate calculated for connection, i, which captures the cell rate that the network can support.

- FERi: the contents of the explicit rate field in the forward RM cell.

- BERi: the contents of the explicit rate field in the backward RM cell.

- CCRi: the current cell rate for connection, i, indicated in the forward RM cell.

- OCRi: the offered cell rate for connection, i, which captures the local bottleneck cell rate for the VC. An algorithm may use bandwidth redistribution for determining the local bottleneck cell rate.

- RCRi: the required cell rate for connection, i, which estimates the current maximum cell rate that can be supported end-to-end.

- PCRi: the peak cell rate of connection, i.

- FSi: the local fair share for connection, i.

- QDi: the queue depth of connection, i.

- QL: the queue threshold for an ABR connection.

- $QL_{ABR}$: the total buffer space available to ABR.

- IRi: the input rate for connection, i, less the MCR for the connection.

- AR: the aggregate input rate for all ABR connections, less the sum of MCR of all connections presently active.

- LR: the output line rate for which connections are contending.

- $BW_{ABR}$: the bandwidth available for distribution among ABR VCs beyond their MCR.

- LFi: the local fair share factor for connection, i.

- $N_{VCs}$: the number of active VCs.

**Congestion Bias (CB) Algorithm**

This algorithm calculates the ECR by multiplying the fair share result for a VC, FSi, by a bias factor,$\beta$). The bias factor is dependent on the congestion level of the VC. The algorithm is described below in response to the five different events identified in section 2.7.
*Change in the bandwidth available to ABR,*
  Calculate FSi according to equation (1).
*Active VC state change,*
  The value of LFi is updated according to equation (3) or (4). The value of the queue threshold is recalculated as

$$QL = QL_{ABR} \times LF_i$$

Alternatively, the value for QL could be static and calculated by dividing the ABR queue length by the total number of VCs. Both alternatives are evaluated in this report.

The same calculation is performed as when the bandwidth available to ABR changes.

*Control interval,*

The required cell rate for a connection, RCRi, can be calculated from one of the following two expressions:

$$RCR_i = \min(IR_i, BER_i);$$

or

$$RCR_i = \min(FER_i, BER_i)$$

where IRi is the VC input rate. The offered cell rate is then calculated by biasing the fair share by a factor which is poroportional to the queue congestion.

$$\beta = \begin{cases} 0.8 & \text{if } \dfrac{QD_i}{QL} > \gamma \\[2mm] 1.2 & \text{if } \dfrac{QD_i}{QL} < \gamma \end{cases}$$

$$OCR_i = \min(PCR_i, \beta \times FS_i),$$

Different values of $\gamma$ are experimented with in the simulations.

The bias factor permits an aggressive rate allocation when the switch is experiencing low utilization and a conservative allocation during congestion. The decision is made on the VC level to ensure fairness.

The explicit cell rate may be determined by using the following expression,

$$ECR_i = \min(OCR_i, RCR_i)$$

*Forward RM cell arrival,*

If RCRi is calculated using FERi, then mark the FERi field according to,

$$FER_{out} = \min(OCR_i, FER_{in}).$$

*Backward RM cell arrival,*

The BER is marked according to,

$$BER_{out} = \min(BER_{in}, OCR_i)$$

Measurement Requirements:

1. Aggregate Output Rate Monitoring

2. VC Accounting (queue size)

3. Number of Active VCs

4. VC Input Rate Monitoring (to support shaping).

**Bandwidth Tracking (BT)**

This algorithm tracks the output bandwidth available to ABR connections with the measured aggregate input rate for all ABR connections.

*Change in the bandwidth available to ABR,*
Nothing.
*Active VC state change,*
The value of LFi is updated according to equation (3) or (4).
*Control interval,*
The required cell rate for a connection, RCRi, can be calculated from one of the following two expressions:

$$RCR_i = min(IR_i, BER_i);$$

or

$$RCR_i = min(FER_i, BER_i)$$

The aggregate input rate, AR, is subtracted from the current aggregate bandwidth available to ABR connections, $BW_{ABR}$, to give the under utilized (free) bandwidth, BF. A positive value of BF indicates that the output link is under utilized, whereas a negative value for BF indicates impending congestion.

To achieve stability, the redistribution of bandwidth is dampened by applying a factor, $\alpha$, to positive values of BF. Similarly, a factor, $\beta$, is applied to all negative values of BF. Two different values of $\alpha$ and $\beta$ may be used because it may be necessary to have $\beta > \alpha$ in order to avoid congestion.

The variable, OBW(k), represents the total offered bandwidth in excess of the MCR guaranteed bandwidth at iteration, k.

$$BF = BW_{ABR} - AR$$

$$\theta = \begin{cases} \alpha \text{ if } BF \geq 0 \\ \beta \text{ if } BF < 0 \end{cases}$$

$$OBW(k) = \max\left(0, \left(OBW(k-1) + \theta \times BF\right)\right),$$

When the input rate reaches a value equal to the bandwidth available to ABR, the value of OBW(k) stabilizes, as does OCRi(k).

$$OCR_i = \min\left[PCR_i, \left(MCR_i + \left(LF_i \times OBW(k)\right)\right)\right]$$

The explicit cell rate may be determined by using the following expression,

$$ECR_i = min(OCR_i, RCR_i)$$

*Forward RM cell arrival,*
If RCRi is calculated using FERi, then mark the FERi field according to,

$$FER_{out} = min(OCR_i, FER_{in}).$$

*Backward RM cell arrival,*
   The BER is marked according to,

$$BER_{out} = \min(BER_{in}, OCR_i)$$

Measurement Requirements:

1. Aggregate Output Rate Monitoring.

2. Aggregate Input Rate Monitoring.

3. Number of Active VCs.

4. VC Input Rate Monitoring (to support shaping).

**Uniform Tracking (UT)**

This algorithm tracks the output bandwidth available to ABR connections with the measured aggregate input rate for all ABR connections, without the need for maintaining the active VC state. This algorithm is a generalization of the algorithm presented in [2], changed in order to support MCR proportional as well as MCR plus equal share.

A nominal value for LFi is calculated: using the sum of MCR for all connections for MCR proportional; and the total number of VCs for MCR plus equal share. This value for LFi is less than or equal to the true LFi, but preserves the ratio of the LFi values between connections. Similarly, the aggregate arrival rate is adjusted by the sum of MCR for all VCs.

*Change in the bandwidth available to ABR,*
   Nothing.
*Active VC state change,*
   Nothing.
*Control interval,*
   The required cell rate for a connection, RCRi, can be calculated from one of the following two expressions:

$$RCR_i = \min(IR_i, BER_i);$$

or

$$RCR_i = \min(FER_i, BER_i)$$

OBW(k) represents the total offered bandwidth in excess of total guaranteed MCR bandwidth.
Set the total offered bandwidth

$$OBW(k) = \frac{BW_{ABR}}{\omega(k-1)},$$

The convergence factor, $\omega(k)$, is given by

$$\omega(k) = \frac{AR}{OBW(k)}.$$

Since the algorithm does not monitor individual VC rates, it cannot identify the connections which are not utilizing their allocated bandwidth. Thus, all connections are scaled in proportion to their weights with respect to the same offered bandwidth. The ECRi for connection, i, is given by,

$$OCR_i = \min\left(PCR_i, (MCR_i + OBW(k) \times LF_i)\right)$$

The explicit cell rate may be determined by using the following expression,

$$ECR_i = \min(OCR_i, RCR_i)$$

*Forward RM cell arrival,*
If RCRi is calculated using FERi, then mark the FERi field according to,

$$FER_{out} = \min(OCR_i, FER_{in}).$$

*Backward RM cell arrival,*
The BER is marked according to,

$$BER_{out} = \min(BER_{in}, OCR_i)$$

Measurement Requirements:

1. Aggregate Output Rate Monitoring

2. Aggregate Input Rate Monitoring

3. VC Input Rate Monitoring (to support shaping)

## Detailed Rate Accounting (DRA)

The DRA algorithm explicitly calculates the bandwidth allocated to each VC by considering the local bandwidth available to ABR, and the end-to-end bottleneck link rate for each connection. The explicit cell rate calculation is performed in accordance with the method described in *"Dynamics of an Explicit Rate Allocation Algorithm for available Bit-Rate (ABR) service in ATM networks",* UCSC-CRL-95-54, February 1, 1996.

The variable BF(k) represents the free bandwidth which is not used by connections that are locally constricted. This free bandwidth is redistributed among connections that bottlenecked at other points in the end-to-end path.

*Change in the bandwidth available to ABR,*
The free bandwidth is updated according to the following expression, where BEi is calculated according to equation (2).

$$BF(k) = \sum_{i \in S_u} \left(BE_i - ECR_i\right).$$

*Active VC state change,*
The value of LFi is updated according to equation (3) or (4). Perform calculation executed when a change in the bandwidth available to ABR occurs (above).

*Control interval,*
The required cell rate for a connection, RCRi, can be calculated from one of the following two expressions:

$$RCR_i = \min(IR_i, BER_i);$$

or

$$RCR_i = \min(FER_i, BER_i)$$

where IRi is the input rate for the connection, BER is the ER field of the backward RM cell, and FER is the ER field of the forward RM cell.

Let the bandwidth which can be made available to a connection be represented by OCRi, the offered cell rate.

A bottlenecked connection is one whose rate is constrained by the local switch. A satisfied connection is one whose rate is constrained by a switch located elsewhere in the network.

The connection under consideration is placed into the set of bottlenecked connections, and the appropriate bandwidth is subtracted from the free bandwidth measure (recall that the free bandwidth measures the total bandwidth under utilized by satisfied connections). If the connection is presently in the satisfied set,

$$\text{if } (VC_i \in S_u) \{$$
$$BF(k) = BF(k-1) - BE_i + ECR_i$$
$$\}$$

Determine the bandwidth which may be offered to the connection,

$$OCR_i = \min(PCR_i, BE_i + BF(k) \times LF_i),$$

OCRi may be calculated to be less that BEi, but it is mandated to ensure that atleast fair share is offered to the connection. Thus,

$$OCR_i = \max(OCR_i, BE_i).$$

Add the connection to either the bottlenecked set or the satisfied set, update the explicit cell rate, and adjust the free bandwidth measure. If the offered cell rate exceeds the required cell rate, then the connection is satisfied,

$$\text{if } (OCR_i \geq RCR_i) \{$$
$$ECR_i = RCR_i$$
$$BF(k) = BF(k-1) + BE_i - ECR_i$$
$$VC_i \in S_u$$
$$\}$$

If the offered cell rate is less than the requested cell rate, then the connection is bottlenecked,

$$\text{if } (OCR_i < RCR_i) \{$$
$$ECR_i = OCR_i$$
$$VC_i \in S_b$$
$$\}$$

*Backward RM cell arrival,*
The BBRM cell is set according to,

$$BER_{out} = \min(OCR_i, BER_{in}).$$

*Forward RM cell arrival,*

The FRM cell is marked according to,

$$FER_{out} = \min(OCR_i, FER_{in}).$$

Measurement Requirements:

1. Aggregate Output Rate Monitoring

2. Number of Active VCs

3. VC Input Rate Monitoring (if FER marking is not supported).

The VSVD boundary performs the functions of the source and destination as described above. In addition, it must mark the ER fields of the RM cells for both the upstream and downstream control loops.

The virtual destination (VD) 5 receives both data and forward RM cells from the upstream loop 1. Data cells are forwarded to the queue 8 of the appropriate output port. RM cells are converted to backward RM cells, and sent to the backward VSVD coupler 10.

The forward VSVD coupler 7 translates upstream input rate and forward RM cell ER values into the corresponding downstream values.

The VS ABR state machine 9 calculates the allowed cell rate (ACR) for each connection given the last ACR, and the ECR forwarded from the ER unit 13.

The ER unit 13 uses the measurements from the input stream, and the ER field from the downstream backward RM cell to determine a new downstream explicit cell rate (ECR), and downstream offered cell rate. The explicit cell rate is the rate at which a VC should send to avoid congestion on an end-to-end basis. The offered cell rate represents the local rate potential for the connection. The ER field for the backward RM cell is marked with OCR if the OCR is less than the BRM ER field value.

The backward VSVD coupler 10 takes the current queue size of a connection, and the current downstream backward ER value, and calculates a new upstream OCR for the connection. The ER field for the upstream backward RM cell is marked with the new OCR if the OCR is less the upstream BRM ER field value.

The VSVD coupling algorithm is described in detail below. In this scheme, for each VC, the downstream BERi value is multiplied by the quantity:

$$\beta = \left(\frac{d}{d + QD_i}\right)^{\varepsilon},$$

where d and $\varepsilon$ are tunable parameters. The parameter, d, may take any value in the range $(0,\infty)$, and scales the queue depth measurement to the queue capacity at the VSVD boundary. The parameter, $\varepsilon$, may take any value in the range $(0,1]$, and controls the sensitivity of the coupling to changes in the queues size. By expanding the above expression in a Taylor series, an approximate value for $\beta$ can be determined which is easily implementable in hardware,

$$\widehat{\beta} = 1 - \left[\frac{\varepsilon \times \left(\frac{QD_i}{d}\right)}{1 + \left(\frac{QD_i}{d}\right)}\right].$$

The downstream OCRi value is then given by:

$$upOCR_i = \hat{\beta} \times dnBER_i$$

A value for ε of 0 corresponds to a tightly coupled system. The larger ε is, the greater is the weight of the local congestion in the calculation for the backward RM cell. Thus the greater the local congestion, the more the upstream sources are asked to reduce their transmission rates.

This algorithm thus uses queue congestion to dynamically adjust the degree of coupling between the two control loops. A mismatch between the (per VC or the aggregate) rates on either side of a VSVD node is seen

- due to an under utilization of the output link by the upstream control loop, in which case the downstream ABR control loop will use the extra BW, or

- due to congestion downstream, and thus the arrival rate at the VD exceeds the service rate at the VS (both local entities), resulting in queue growth. It is natural to use the queue depth as an indication of local congestion.

In this scheme, for each VC, the coupling between the two control loops is given by the following factor,

$$\beta = \frac{d}{d + QD_i},$$

where d is a "tunable" (positive) integer and QDi is the queue depth of connection i. The value of d is set proportional to the maximum queue size. Thus, the upstream offered cell rate is given by,

$$upOCR_i = dnBERout_i \times \frac{d}{d + QD_i}$$

Clearly the larger the value of d the greater the decoupling between the two loops. Thus the greater the local congestion, the more the upstream sources are asked to reduce their transmission rates.

In an alternative embodiment, the VSVD coupler takes the current downstream BERi value and calculates a new upstream offered cell rate (OCRi) for the connection. The ER field for the upstream backward RM cell is marked with the OCRi if the OCRi is less than the upstream BRM ER field value.

The VSVD coupling algorithm is described in detail below.

The VSVD coupler maintains an internal estimate, EACRi, of the ACRi for each connection. On receipt of a BRM cell, the EACRi for the connection is updated according to

$$upOCR_i(k) = upOCR_i(k-1) + \sigma \times \big(dnBER_i(k) - upOCR_i(k-1)\big),$$

where σ controls the degree of coupling between the upstream and downstream control loops. A value of σ = 1 provides tight coupling, and a value of σ = 0 results in a decoupled system.

This algorithm thus sets the upstream OCR value for the connection by low pass filtering the downstream BER. The upstream OCRi is initialized to the PCR of the connection at initialization time.

The upstream OCR is set according to the following expression,

$$upOCR_i(k) = upOCR_i(k-1) + \sigma \times \big(dnBERout_i(k) - upOCR_i(k-1)\big),$$

where σ controls the degree of coupling between the upstream and downstream control loops. A value of σ = 1 provides tight coupling, and a value of σ = 0 results in a decoupled system.

The invention has several important characteristics: it improves stability by loosely coupling the upstream and downstream control loops; and it provides tunable parameters which can be engineered by the network operator to provide an optimal performance point between the competing requirements of stability and response time.

This scope of this invention extends to: the use of the current queue size and the downstream explicit rate value as the coupling variables; and the backward VSVD coupling algorithm itself; the placement of the ER algorithm and the VSVD coupler within a VSVD element; and the nature of the VSVD coupling algorithm itself.

The invention complies with ITU and ATM Forum standards and can be applied to any switching equipment which supports the ABR service category and implements the explicit rate VSVD ABR functionality.

GLOSSARY

**ABR**    *Available Bit Rate . An* ATM layer service category, for which the limiting ATM layer transfer characteristics provided by the network may change subsequent to connection establishment. A flow control mechanism is specified which supports several types of feedback to control the source rate in response to changing ATM layer transfer characteristics. It is expected that an end-system that adapts its traffic in accordance with the feedback will experience a low cell loss ratio and obtain a fair share of the available bandwidth according to a network specific allocation policy. Cell delay variation is not controlled in this service, although admitted cells are not delayed unnecessarily.

**ACR**    *Allowed Cell Rate* An ABR service parameter, ACR is the current rate in cells/s at which a source is allowed to send.

**BT**    *Burst Tolerance* BT applies to ATM connections supporting VBR services and is the limit parameter of the GCRA.

**CAC**    *Connection Admission Control* The set of actions taken by the network during the call setup phase (or during call re-negotiation phase) in order to determine whether a connection request can be accepted or should be rejected (or whether a request for re-allocation can be accommodated).

**CBR**    *Constant Bit Rate.* An ATM Forum service category with a conformant traffic pattern given by GCRA(PCR, CDVT), and specific performance guarantees for CTD, CDV, and CLR.

**CDV**    *Cell Delay Variation* A component of the cell transfer delay induced by buffering and cell scheduling. Peak-to-peak CDV is a QoS delay parameter associated with CBR and VBR services. The peak-to-peak CDV is the ((1-a) quantile of the CTD) minus the fixed CTD that could be experienced by any delivered cell on a connection during the entire connection holding time. The parameter 'a' is the probability of a cell arriving late.

**CDVT**    *Cell Delay Variation Tolerance* Due to the alteration of traffic characteristics of ATM connections by ATM layer functions, connection multiplexing, and OAM cell insertion, the inter-arrival time between consecutive cells of a connection as monitored at the UNI may be affected by some randomness. The upper bound on the clumping measure is the CDVT.

**CLP**    *Cell Loss Priority* This bit in the ATM cell header indicates two levels of priority for ATM cells. The CLP=0 cells are higher priority than the CLP=1 cells. CLP=1 cells may be discarded during periods of congestion to preserve the CLR of CLP=0 cells.

**CLR**    *Cell Loss Ratio* The number of lost cells at a network entity divided by the number of cells that arrived at the entity. When the entity is an (end-to-end) ATM connection, the CLR is defined as the number of lost cells divided by the number of transmitted cells..

**CTD**    *Cell Transfer Delay* The elapsed time between the a cell exit event at the measurement point 1 and the corresponding cell entry event at measurement point 2. The CTD between two measurement points is the sum of the total inter-ATM node transmission delay and the total ATM node processing delay.

**DS-0**    *Digital Signal Level 0* The 64 kbps rate that is the basic building block for both the North American and European digital hierarchies. For 53 byte ATM cells, this rate translates to approximately 151 cells/s.

**DS-1**    *Digital Signal Level 1* The North American Digital Hierarchy signalling standard for transmission at 1.544 Mbps. This rate supports 24 simultaneous DS-0 channels. For 53 byte ATM cells, this rate translates to approximately 3642 cells/s.

**DS-3**    *Digital Signal Level 3* The North American Digital Hierarchy signalling standard for transmission at 44.736 Mbps. This rate supports 28 DS-1 plus overhead. For 53 byte ATM cells, this rate translates to approximately 105,509 cells/s.

**E1**    *CEPT1* The 2.048 Mbps rate used by European CEPT carrier to transmit 30 64 kbps digital channels, a 64 kbps signalling channel, and 64 kbps for framing and maintenance. For 53 byte ATM cells, this rate translates to approximately 4830 cells/s.

**E3**    *CEPT3* The 34.368 Mbps rate used by European CEPT carrier to transmit 16 CEPTIs plus overhead. For 53 byte ATM cells, this rate translates to approximately 81,057 cells/s.

**EFCI**    *Explicit Forward Congestion Indication* EFCI is an indication in the ATM cell header. A network element in an impending-congested or congested state may set EFCI so that this indication may be examined by the destination end-system. Impending congestion is the state when a network equipment is operating around its engineered capacity level.

**EPD**    *Early Packet Discard* Congestion control mechanism which discards an entire AAL5 frame when the first cell of the frame fails the EPD queue capacity test.

**GCRA** *Generic Cell Rate Algorithm* The GCRA is used to define conformance with respect to the traffic contract of the connection. For each cell arrival the GCRA determines whether the cell conforms to the traffic contract. The UPC may implement the GCRA, or one or more equivalent algorithms to enforce conformance. The GCRA is defined with two parameters: the increment (I); and the limit (L).

**MBS** *Maximum Burst Size* The burst tolerance (BT) is conveyed through the MBS in units of cells. The BT together with the SCR and the GCRA determine the MBS that may be transmitted at the peak rate and still be in conformance with the GCRA.

**MCR** *Minimum Cell Rate* An ABR service traffic descriptor, in cells/sec, that is the rate at which the source is always allowed to send.

MCTD *Maximum Cell Transfer Delay (MaxCTD)* The MCTD is the ((1-a) quantile of the CTD) that could be experienced by any delivered cell on a connection during the entire connection holding time. The parameter 'a' is the probability of cell arriving late.

**PCR** *Peak Cell Rate* The cell rate which the source may never exceed, in units f cells/sec.

**PPD** *Partial Packet Discard* Congestion control mechanism which discards the remaining cells of an AAL5 frame when one of the cells of that frame is discarded due to the violation of any queue capacity test.

**QoS** *Quality of Service* A particular instance of set of generic parameters, namely CDV, CTD, and CLR, that are used to describe the end-to-end performance guarantees of an ATM connection.

**SCR** *Sustainable Cell Rate* The SCR is an upper bound on the conforming average rate of an ATM connection over time scales which are long relative to those for which the PCR is defined. Enforcement of this bound by the UPC would allow the network to allocate sufficient resources, but less than those based on the PCR, and still ensure that the performance objectives can be achieved.

**TCP** *Transmission Control Protocol* A protocol which provides end-to-end, connection-oriented, reliable transport layer (layer 4) functions over IP controlled networks. TCP performs the following functions: flow control between two end systems; reliable packet delivery; and sequenced packet delivery.

**UBR** *Unspecified Bit Rate* An ATM service category which does not specify traffic related service guarantees. No commitments are made as to bandwidth, CLR, CDV, or CTD.

**VBR** *Variable Bit Rate* An ATM service category which supports variable bit rate data traffic with average and peak traffic parameters. There are two types of VBR service categories defined by the ATM Forum Traffic Management Specification: real-time VBR (rtVBR); and non-real-time VBR (nrtVBR). Both service categories specify specific guarantees on CLR. Only rtVBR specifies performance guarantees on peak-to-peak CDV and MCTD.

**Claims**

1. A method of controlling the flow of cells in an asynchronous network, wherein cell flow in upstream and downstream portions of a virtual connection is controlled by respective upstream and downstream control loops employing resource management (RM) cells, characterized in that the degree of coupling between the two control loops is dynamically adjusted to optimize network stability and response time.

2. A method as claimed in claim 1, characterized in that the degree of coupling between the two control loops is adjusted in accordance with the degree of congestion at the boundary between the two control loops.

3. A method as claimed in claim 2, characterized in that the upstream control loop is controlled by a single numeric value that captures the status of the downstream control loop and the congestion at the control loop boundary.

4. A method as claimed in claim 3, characterized in that said congestion is determined in an output queue cell buffer between the upstream and downstream control loops.

5. A method as claimed in claim 1, characterized in that the reaction of the upstream control loop to changes in the downstream control loop is damped to achieve end-to-end stability over the connection.

6. A method as claimed in claim 5, characterized in that an upstream Offered Cell Rate (OCR) is determined by low pass filtering the downstream Backward Explicit Rate (BER), and the upstream BER is set to the minimum of the current upstream BER and the OCR.

7. A switching node for an asynchronous network, comprising means for providing a virtual destination and virtual source for a pair of upstream and downstream portions of a virtual connection controlled by respective upstream and downstream control loops employing resource management (RM) cells, and means for dynamically adjusting the degree of coupling between said two control loops to optimize network stability and response time.

8. A switching node as claimed in claim 7, further comprising forward and backward couplers for interconnecting the upstream and downstream control loops.

9. A switching node as claimed in claim 8, comprising an output queue buffer, means for monitoring the congestion in the output buffer, and means for setting the upstream backward explicit rate in accordance with the degree of congestion in the output buffer.

10. A switching node as claimed in claim 9, characterized in that said setting means takes the current queue size of a connection, the current downstream ER value, calculates a new upstream Offered Cell rate for the connection, and marks a backward RM cell (BRM) with the new OCR if the OCR is less than the ER field value in the upstream BRIM.

11. A switching node as claimed in claim 7, characterized in that said adjusting means damps the upstream loop to changes in the downstream loop to achieve end-to-end stability.

12. A switching node as claimed in claim 11, characterized in that said adjusting means takes the current BERi value, calculates a new upstream offered cell rate (OCRi) and marks the coupler with the OCRi if the OCRi is less than the upstream field value of the ER in the backward resource management (BRM) cell.

Fig. 1

→ Cell Flow　　⟹ Information Flow

Fig. 2

Per VC Input Rate Monitoring

Aggregate Output Rate Monitoring

Aggregate Input Rate Monitoring

30

FIFO

Per VC Queue Size

Aggregate Queue Size

VC Accounts

Fig. 3